# EUROPÄISCHE PATENTSCHRIFT

(11) **EP 0 932 905 B1**
(45) Veröffentlichungstag und Bekanntmachung des Hinweises auf die Patenterteilung: **05.04.2000**
(21) Anmeldenummer: 97913169.5
(22) Anmeldetag: 21.10.1997
(51) Int. Cl.: G21C 17/022

(54) **MESSVORRICHTUNG ZUR ERMITTLUNG EINER BORKONZENTRATION**
MEASUREMENT DEVICE FOR DETERMINING BORON CONCENTRATION
DISPOSITIF DE MESURE SERVANT A DETERMINER UNE CONCENTRATION EN BORE

(30) Priorität: 21.10.1996 DE 19643375
(43) Veröffentlichungstag der Anmeldung: 04.08.1999
(73) Patentinhaber: SIEMENS AKTIENGESELLSCHAFT, 80333 München (DE)
(72) Erfinder: BAUER, Horst, D-91052 Erlangen (DE); NOPITSCH, Klaus, D-91126 Rednitzhembach (DE); GEHRING, Eduard, D-91054 Buckenhof (DE)
(86) Internationale Anmeldenummer: EP9705810
(87) Internationale Veröffentlichungsnummer: WO9818136

(56) Entgegenhaltungen:
- DE-A- 2 645 846
- DE-A- 2 840 569
- US-A- 3 578 562
- US-A- 3 898 467
- K. FÄHRMANN, F. JÄPEL: "Eine Messvorrichtung zur Überwachung der Borsäurekonzentration in Reaktoranlagen" KERNENERGIE, Bd. 11, 1967, Seiten 337-339, XP002054977 in der Anmeldung erwähnt
- DATABASE WPI Section Ch, Week 8204 Derwent Publications Ltd., London, GB; Class K05, AN 82-07208E XP002054978 & SU 602 045 B (VOLEGOV V V) , 7.September 1981
- PATENT ABSTRACTS OF JAPAN vol. 014, no. 565 (P-1143), 17.Dezember 1990 & JP 02 242197 A (MITSUBISHI HEAVY IND LTD), 26.September 1990

## Beschreibung

Die Erfindung bezieht sich auf eine Meßvorrichtung zur Ermittlung einer Borkonzentration im Kühlmittel eines Kühlmittelkreislaufs einer Kernkraftanlage.

Im Kühlmittel des Kühlmittelkreislaufs einer Kernkraftanlage wird Bor als Neutronenabsorber eingesetzt. Durch das Bor wird der Abbrand der Brennstäbe gesteuert und kompensiert, indem in Abhängigkeit von der Borkonzentration in stärkerem oder schwächerem Maße Neutronen absorbiert, d.h. der Kettenreaktion entzogen werden. Ungleichmäßigkeiten in der Leistungsdichteverteilung durch sonst übliche mechanische Steuerorgane können somit vermieden werden, wobei eine Leistungssteigerung möglich ist. Demzufolge muß die Borkonzentration im Kühlmittel, insbesondere im Kühlmittel des Primärkreislaufes oder in nebengeordneten Kreisläufen, überwacht werden.

Aus dem Dokument "Kernenergie", Heft 11, 1967, Seiten 337 bis 339, ist es bekannt, die Borsäurekonzentration mittels eines neutronenabsorptiometrischen Verfahrens zu bestimmen. Die dabei eingesetzte Meßvorrichtung ermöglicht eine Bestimmung der Borsäurekonzentration unter normalen Betriebsbedingungen, d.h. bis zu einer Umgebungstemperatur von 120° C und einem Systemdruck von 120 bar. Üblicherweise treten aber in den Kühlmittelkreisläufen, insbesondere im Primärkreislauf einer Kernkraftanlage, Temperaturen von bis zu 380° C bei einem Systemdruck von etwa 180 bar auf. Aufgrund dieser höheren Systembedingungen gegenüber den normalen Betriebsbedingungen wird die in dem Dokument beschriebene Meßvorrichtung in Überwachungsschränken, und zwar in hinreichend großer Entfernung vom Kühlmittelkreislauf, eingesetzt.

Bei der bekannten Meßvorrichtung ist ein Eingriff in den Kühlmittelkreislauf notwendig. Eine vom Kühlmittelkreislauf abgezweigte Bypassleitung durchläuft zur Ermittlung der Borsäurekonzentration die Meßvorrichtung. Ein Einsatz einer derartigen Meßvorrichtung, die als Durchlaufmeßeinrichtung ausgeführt ist, ist hinsichtlich ihrer Mobilität begrenzt. Die Montage ist sehr aufwendig und führt zu längeren Stillstandszeiten der Kernkraftanlage.

Der Erfindung liegt daher die Aufgabe zugrunde, eine Meßvorrichtung zur Ermittlung einer Borkonzentration im Kühlmittel eines Kühlmittelkreislaufs einer Kernkraftanlage anzugeben, die eine Messung der Borkonzentration ohne einen Eingriff in den Kühlmittelkreislauf und in besonders einfacher Weise ermöglicht.

Erfindungsgemäß wird diese Aufgabe gelöst durch eine Meßvorrichtung zur Ermittlung einer Borkonzentration in einem Kühlmittel eines Kühlmittelkreislaufs einer Kernkraftanlage, wobei ein mobiler Sender und ein mobiler Empfänger jeweils unter Zwischenschaltung zumindest eines kühlbaren Raumbereiches zur Anordnung an einer kühlmittelführenden Komponente des Kühlmittelkreislaufs vorgesehen sind.

Die Erfindung geht dabei von der Überlegung aus, daß anstelle einer Bypassleitung für eine Durchlaufmeßeinrichtung ein Teil des Kühlmittelkreislaufsystems selbst genutzt werden kann. Die Meßvorrichtung ist bevorzugt derart aufgebaut, daß sie direkt am Kühlmittelkreislauf befestigt werden kann. Sie ist dabei besonders temperatur- und strahlungsfest, wodurch auch ein Einsatz unter extremen Umgebungsbedingungen möglich ist.

Vorteilhafte Ausgestaltungen der Erfindung sind Gegenstand der Unteransprüche.

Um den Sender und den Empfänger vor hohen Temperaturen der Komponente schützen zu können, ist es günstig, einen von einem Kühlmedium durchströmten Kühlkanal an der Komponente zumindest in dem jeweiligen Raumbereich des Senders und des Empfängers anzuordnen. Beispielsweise kann der Kühlkanal in dem Raumbereich zwischen dem Sender und der Komponente sowie in dem Raumbereich zwischen dem Empfänger und der Komponente angeordnet sein. Unter Komponente wird vorliegend z.B. ein Tank, ein Kessel, ein Rohrstück oder ein sonstiger, ggf. auch großflächiger, das Kühlmedium führender oder enthaltender Behälter verstanden.

Um eine einfache, gute Kühlung, d.h. eine möglichst konstante und zuverlässige Kühlung des Senders und des Empfängers zu gewährleisten, kann als Kühlmedium bevorzugt Luft dienen. Dazu wird die Luft oder Kühlluft z.B. mittels eines Ventilators durch den Kühlkanal geblasen. Darüber hinaus ist die Temperatur der Kühlluft zweckmäßigerweise vorgebbar. Die dabei vorgegebene Temperatur gewährleistet, daß die Kühlluft einen Grenzwert nicht über- oder unterschreitet. Dazu ist beispielsweise über die Leistung des Ventilators der Kühlluftstrom beeinflußbar. Somit ist gewährleistet, daß die Meßeinrichtung in allen Teilen vor einer Überhitzung geschützt ist.

Auch weisen der oder die beiden Raumbereiche des Senders und des Empfängers vorteilhafterweise eine Isolationsschicht, die z.B. unmittelbar an der Komponente des Kühlmittelkreislaufs angeordnet ist, auf. In der Isolationsschicht wird beispielsweise als Isolator Luft verwendet. Der Sender und der Empfänger sind vorzugsweise jeweils in einer zugehörigen Kammer angeordnet. Damit ist eine räumliche Trennung gegeben, wodurch der Sender und der Empfänger jeweils vor zu hoher Temperatur geschützt untergebracht sind.

Um anhand des neutronenabsorptiometrischen Verfahrens die Borkonzentration ermitteln zu können, dient als Sender eine Neutronenquelle und als Empfänger zumindest ein Zählrohr. Aus Strahlungsgründen der Neutronenquelle sowie aufgrund von Beeinflussungen der Messung durch äußere Faktoren, wie z.B. Feuchtigkeit, ist eine Abschirmung, ggf. gemeinsam oder je Neutronenquelle und Zählrohr, vorgesehen. Zweckmäßigerweise umfaßt die Abschirmung eine erste Schicht aus einem absorbierenden Moderator und eine zweite Schicht aus neutronenabsorbierendem Material, z.B. Cadmiumblech, sowie eine dritte Schicht aus austenitischem Material, z.B. Stahlblech.

Mittels des absorbierenden Moderators, z.B. Polyäthylenmoderator, wird der durch den Sender erzeugte Neutronenfluß abgebremst und teilweise reflektiert. Somit ist insbesondere durch den Einsatz des absorbierenden Moderators und des Cadmiumbleches eine geringe Strahlenbelastung beim Betriebspersonal gewährleistet.

In vorteilhafter Ausgestaltung sind der Sender und der Empfänger in einem ein- oder mehrteiligen, insbesondere einem zweiteiligen, Gehäuse angeordnet. Dazu kann beispielsweise der Sender in einem ersten Gehäuseteil und der Empfänger in einem zweiten Gehäuseteil angeordnet sein.

Um den Sender und den Empfänger besonders einfach und haltbar an die Komponente oder das Leitungsteilstück des Kühlkreislaufsystems befestigen zu können, sind zumindest der Sender und der Empfänger anhand zumindest eines Befestigungsmittels an der Komponente bzw. am Leitungsteilstück befestigbar. Dazu können zum Beispiel die beiden Gehäuseteile formschlüssig an das Leitungsteilstück angelegt werden und mittels der Befestigungsmittel miteinander verschraubt werden. Bei großflächigen Komponenten kann eine Befestigung z.B. über Stützeinrichtungen erfolgen. In allen Fällen wird die Komponente, an der gemessen wird, nicht beschädigt oder beeinträchtigt. Es sind also weder baulicher Maßnahmen noch Eingriffe an der Komponente erforderlich.

Da das neutronenabsorptiometrische Meßverfahren maßgeblich von der Konstanz der Meßgeometrie abhängt, sind eine Anzahl von Abstandsmitteln dergestalt vorgesehen, daß die Länge des Meßweges zwischen dem Sender und dem Empfänger auch bei einer Veränderung von Umgebungsbedingungen annähernd konstant ist. Dies gilt selbstverständlich für einen geradlinigen Meßweg oder einen Meßweg mit mindestens einer Reflexionsstelle. Derartige Abstandsmittel, z.B. Stützvorrichtungen, sind zweckmäßigerweise temperatur- und dehnungsbeständig ausgeführt.

Zweckmäßiger sind der Sender und der Empfänger zumindest annähernd einander gegenüberliegend an der Komponente angeordnet. Damit ist ein geradliniger direkter Meßweg gebildet. Dies ist günstig für Komponenten mit relativ kleinen baulichen Maßen. Alternativ können der Sender und der Empfänger derart an der Komponente angeordnet sein, daß das vom Empfänger aufgenommene Meßsignal im wesentlichen ein reflektiertes Meßsignal ist. Diese Ausführung kommt insbesondere bei großvolumigen Komponenten zur Anwendung. Dabei kann das vom Sender ausgesandte Signal einfach oder mehrfach reflektiert werden.

Um den Wert der Borkonzentration als Zeitfunktion unabhängig von Druck-, Temperatur- und Strahlungseinflüssen darstellen zu können, ist zumindest der Empfänger mit einer Auswerteeinheit verbunden. Anhand von modellbasierten Plausibilitäts- und Bilanzierungsalgorithmen sind Störeinflüsse eliminierbar, so daß eine genaue Darstellung der Meßwerte der Borkonzentration im Medium gewährleistet ist.

Die mit der Erfindung erzielten Vorteile bestehen insbesondere darin, daß bedingt durch den einfachen Aufbau der Meßvorrichtung, insbesondere aufgrund der Mobilität des Senders und des Empfängers, zur Ermittlung der Borkonzentration ein Eingriff in den Kühlmittelkreislauf der Kernkraftanlage nicht erforderlich ist. Darüber hinaus ist die Meßvorrichtung mittels des kühlbaren Raumbereiches derart ausgelegt, daß sie für einen Einsatz unter extremen Systembedingungen oder Betriebsbedingungen, z.B. bis zu Betriebstemperaturen von 380°C, geeignet ist. Somit ist die Meßvorrichtung besonders für einen mobilen Einsatz sowie für Nachrüstungen in Altanlagen geeignet.

Ausführungsbeispiele der Erfindung werden anhand einer Zeichnung näher erläutert. Darin zeigen:
- FIG 1: eine schematische Darstellung einer Meßvorrichtung zur Messung von Borkonzentration im Längsschnitt und
- FIG 2: schematisch die Meßvorrichtung gemäß Figur 1 im Querschnitt.

Einander entsprechende Teile sind in beiden Figuren mit denselben Bezugszeichen versehen.

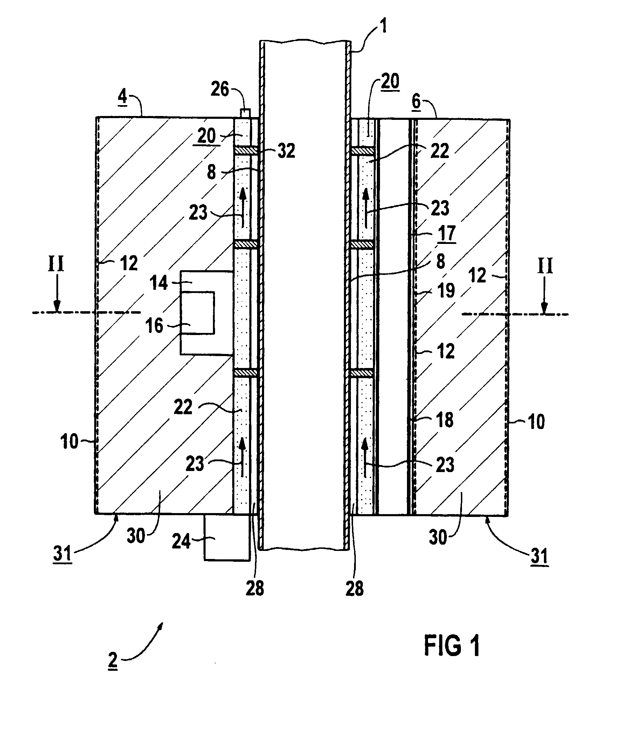

Die im Ausführungsbeispiel gemäß FIG 1 dargestellte und um eine Komponente, ein Leitungsteilstück oder Mediumrohr 1 angeordnete Meßvorrichtung 2 oder Meßzelle ist Teil einer nicht näher dargestellten Kernkraftanlage. Dabei ist das Mediumrohr 1 Teil eines Kühlmittelkreislaufsystems, z.B. eines Primärkreislaufsystems.

Die Meßvorrichtung 2 umfaßt ein erstes schalenförmiges Gehäuseteil 4 und ein zweites schalenförmiges Gehäuseteil 6. Dabei bestehen die jeweilige Innenwand 8 und die jeweilige Außenwand 10 des ersten Gehäuseteils 4 und des zweiten Gehäuseteils 6 bevorzugt aus austenitischem Stahl. Auf den jeweiligen Innenseiten der Außenwände 10 ist ein Cadmiumschirm 12 in Form von Cadmiumblechen zum Auffangen von thermischen Neutronen aufgebracht.

Im ersten Gehäuseteil 4 ist eine Quellenkammer 14 zur Aufnahme einer Neutronenquelle 16 vorgesehen, die als Sender dient. Im zweiten Gehäuseteil 6 ist eine Zählrohrkammer 17 zur Aufnahme von zwei zueinander parallelen Zählrohren 18 angeordnet, welche als Empfänger dienen. Die zur Außenwand 10 gerichtete Wand 19 der Zählrohrkammer 17 weist ebenfalls einen Cadmiumschirm 12 auf. Es sind auch Ausführungen mit mehreren Sendern und/oder Empfängern möglich, mit denen beispielsweise Konzentrationsgefälle oder Signaldifferenzen erfaßbar sind.

Um die Neutronenquelle 16 und die Zählrohre 18 vor hohen Temperaturen des Mediumrohrs 1 zu schützen, ist zwischen der Quellenkammer 14 und der Innenwand 8 bzw. der Zählrohrkammer 17 und der Innenwand 8 ein Kühlkanal 20 angeordnet. Die Länge des Kühlkanals 20 in vertikaler Richtung entspricht dabei zumindest der Länge der Meßvorrichtung 2. Je nach Ausführungsform des Mediumrohres 1 kann der Kühlkanal 20 z.B. ringförmig oder streifenförmig ausgebildet sein.

Der Kühlkanal 20 wird von einem Kühlmedium 22 in Richtung der Pfeile 23 durchströmt. Das Kühlmedium 22, z.B. Luft, wird mittels eines Ventilators 24 durch den Kühlkanal 20 gedrückt. Der Ventilator 24 ist beispielsweise am unteren Ende des ersten Gehäuseteiles 4 angeordnet. Am entgegengesetzten Ende des ersten Gehäuseteiles 4 ist ein Temperatursensor 26 zur Ermittlung der Temperatur des Kühlmediums 22 angeordnet. Der ermittelte Meßwert des Temperatursensors 26 wird einem nicht näher dargestellten Temperaturreglungssystems zugeführt. Das nicht näher dargestellte Temperaturreglungssystem gewährleistet, daß das Kühlmedium 22 einen Grenzwert nicht über- oder unterschreitet. Dazu werden die Leistung des Ventilators 24 und der daraus resultierende Kühlluftstrom beeinflußt.

Weiter umfassen das erste Gehäuseteil 4 und das zweite Gehäuseteil 6 zwischen der Innenwand 8 und dem Kühlkanal 20 gegebenenfalls eine zum Kühlkanal 20 zusätzliche Isolationsschicht 28, wobei als Isolator Luft dient. Analog zum Kühlkanal 20 kann die Isolationsschicht 28 beispielsweise ring- oder streifenförmig ausgebildet sein.

Der zwischen der Innenwand 8 und der Außenwand 10 des ersten Gehäuseteiles 4 befindliche Zwischenraum ist mit einem absorbierenden Moderator 30 ausgefüllt. Dabei ist als absorbierender Moderator 30 Polyäthylen eingesetzt. Analog dazu ist im zweiten Gehäuseteil 6 ebenfalls der Zwischenraum mit dem absorbierenden Moderator 30 ausgefüllt. Der absorbierende Moderator 30, der aus neutronenabsorbierenden Material bestehende Cadmiumschirm 12 und die aus austenitischen Material bestehende Außenwand 10 bilden eine schichtförmige Abschirmung 31 für die durch die Neutronenquelle 16 erzeugte Strahlung.

In der Isolationsschicht 28 und in dem Kühlkanal 20 sind in radialer Richtung temperatur- und dehnungsbeständige Abstandsmittel 32 eingefaßt. Mit Hilfe dieser Abstandsmittel 32, z.B. Stützvorrichtungen, wird eine temperaturbedingte Veränderung der Meßgeometrie, insbesondere der Länge des Meßweges, verhindert. Beispielsweise wird als temperatur- und dehnungsbeständiges Material Keramik oder Glimmerglas verwendet.

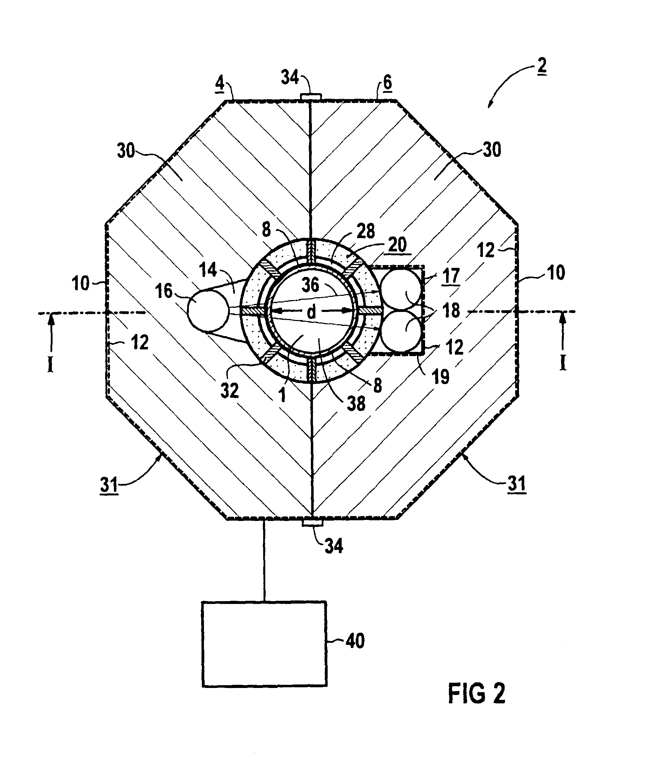

FIG 2 zeigt die Meßvorrichtung 2 im Querschnitt. Danach sind das erste Gehäuseteil 4 und das zweite Gehäuseteil 6 mittels einer Anzahl von außen angebrachten Befestigungselementen 34 miteinander verbunden. Die gesamte Meßvorrichtung umgreift oder umklammert dabei das Mediumrohr 1. Die Befestigungselemente 34 sind beispielsweise als Klemmen, Schrauben oder Sperrvorrichtungen ausgebildet. In dieser Ansicht ist zu erkennen, daß auch zwei Zählrohre 18 vorgesehen sind; es können auch mehr als zwei Zählrohre vorgesehen sein. Die Neutronenquelle 16 und die beiden Zählrohre 18 sind in der Quellenkammer 14 bzw. in der Zählrohrkammer 17 angeordnet.

Zur Kühlung der Neutronenquelle 16 und der beiden Zählrohre 18 verlaufen konzentrisch um das Mediumrohr 1 die Isolationsschicht 28 und der Kühlkanal 20. Darüber hinaus sind in gleichmäßigen Abständen in die Isolierschicht 28 und in den Kühlkanal 20 die Abstandsmittel 32 angebracht. Die Außenwände 10 sowie die Wand 19 der Zählrohrkammer 17 weisen analog zu FIG 1 jeweils einen Cadmiumschirm 12 auf.

Mittels der Neutronenquelle 16 wird ein Neutronenfluß 36 durch das im Mediumrohr 1 fließende Kühlmittel 38 gesendet. Der Neutronenfluß 36 durchdringt das mit Bor angereicherte Kühlmittel 38. In Abhängigkeit von der Borkonzentration im Kühlmittel 38 wird der Neutronenfluß 36 geschwächt. Der veränderte Neutronenfluß 36 wird mittels der Neutronendetektoren, d.h. der Zählrohre 18, ermittelt.

Die von den Zählrohren 18 gebildeten Meßwerte werden einer Auswerteeinheit 40 zugeführt. Die Auswerteeinheit 40 ermittelt aus der Zählrate und der Temperatur des Kühlmittels 38 (Meßfühler nicht dargestellt) die Konzentration des Bors oder der Borsäure. Indem die Neutronenquelle 16 diagonal gegenüber den beiden Zählrohren 18 angeordnet ist, durchläuft der Neutronenfluß 36 das Kühlmittel 38 über die gesamte Breite des Durchmessers d des Medienrohres 1. Dabei ist ein im wesentlichen geradliniger Meßweg zwischen der Neutronenquelle 16 und den Zählrohren 18 im Mediumrohr 1 gebildet.

Die beschriebene Meßvorrichtung 2 weist aufgrund ihrer hochwirksamen, aktiven Wärmeisolierung durch den beeinflußbaren Kühlluftstrom des Kühlkanals 6 ein gutes Verhalten in bezug auf thermische Einflüsse bei der Ermittlung der Borkonzentration auf. Die Meßvorrichtung 2 eignet sich somit besonders für den direkten Einsatz am Primärkreislauf einer Reaktoranlage, bei dem Temperaturen von bis zu 380 °C auftreten können. Die Meßvorrichtung 2 ist mechanisch derart aufgebaut, daß selbst starke Temperaturschwankungen keine Geometrieveränderungen und somit keine Beeinflussungen des Meßverfahrens bewirken.

Eventuell verbleibende Abhängigkeiten des neutronenabsorptiometrischen Verfahrens vom thermodynamischen Zustand des Kühlmittels 38 und der hydraulischen Systemfahrweise im Primärkühlkreislauf können durch rechnergestützte Auswerteverfahren in der Auswerteeinheit 40 eliminiert werden. Dabei werden zur Erhöhung der Genauigkeit und einer schnellen Anzeige neben dem Meßsignal der Meßvorrichtung 2 auch weitere für die Messung der Borkonzentration relevanten Prozeßinformationen genutzt. Diese werden in der Auswerteeinheit 40 durch Anwendung modellbasierter Plausilibäts- und Bilanzierungsalgorithmen verarbeitet. Auch ist durch den strahlungsabschirmenden Aufbau der Meßvorrichtung 2 eine nennenswerte Strahlenbelastung des Betriebspersonals ausgeschlossen.

Bei großflächigen Komponenten 2 ist eine gleichartige Meßvorrichtung 2 einsetzbar, wobei dann die Neutronenquelle 16 und die Zählrohre 18 in einem einteiligen Gehäuse angeordnet sind. Bei einer derartigen Vorrichtung ist die Verwendung eines Reflexionsmeßsignals günstig. Dabei wird das der Neutronenquelle 16 ausgestrahlte Signal innerhalb der Komponente 1 reflektiert und dann von den Zählrohren 18 aufgenommen.

## Patentansprüche

1. Meßvorrichtung (2) zur Ermittlung einer Borkonzentration in einem Kühlmittel (38) eines Kühlmittelkreislaufs einer Kernkraftanlage, wobei ein mobiler Sender und ein mobiler Empfänger jeweils unter Zwischenschaltung zumindest eines kühlbaren Raumbereichs zur Anordnung an einer kühlmittelführenden Komponente (1) des Kühlmittelkreislaufs vorgesehen sind.

2. Meßvorrichtung (2) nach Anspruch 1, bei der der Raumbereich einen von einem Kühlmedium (22) durchströmten Kühlkanal (20) aufweist.

3. Meßvorrichtung (2) nach Anspruch 2, bei der als Kühlmedium (22) Luft dient.

4. Meßvorrichtung (2) nach einem der Ansprüche 2 oder 3, bei der die Temperatur des Kühlmediums (22) vorgebbar ist.

5. Meßvorrichtung (2) nach einem der Ansprüche 1 bis 4, bei der der Raumbereich eine zusätzliche Isolationsschicht (28) umfaßt.

6. Meßvorrichtung (2) nach einem der Ansprüche 1 bis 5, bei der der Sender und der Empfänger jeweils in einer zugehörigen Kammer (14, 17) angeordnet sind.

7. Meßvorrichtung (2) nach einem der Ansprüche 1 bis 6, bei der als Sender eine Neutronenquelle (16) dient.

8. Meßvorrichtung (2) nach einem der Ansprüche 1 bis 7, bei der als Empfänger zumindest ein Zählrohr (18) dient.

9. Meßvorrichtung (2) nach einem der Ansprüche 1 bis 8, bei der der Sender und der Empfänger jeweils von einer Abschirmung (31) umgeben sind.

10. Meßvorrichtung (2) nach Anspruch 9, bei der die Abschirmung (31) eine erste Schicht aus einem absorbierenden Moderator (30) umfaßt.

11. Meßvorrichtung (2) nach einem der Ansprüche 9 oder 10, bei der die Abschirmung (31) eine zweite Schicht aus neutronenabsorbierendem Material (12) umfaßt.

12. Meßvorrichtung (2) nach einem der Ansprüche 9 bis 11, bei der die Abschirmung (31) eine dritte Schicht aus austenitischen Material (10) umfaßt.

13. Meßvorrichtung (2) nach einem der Ansprüche 1 bis 12, bei der Sender und der Empfänger in einem ein- oder mehrteiligen, insbesondere zweiteiligen, Gehäuse (4, 6) angeordnet sind.

14. Meßvorrichtung (2) nach einem der Ansprüche 1 bis 13, bei der Abstandsmittel (32) vorgesehen sind, derart, daß die Länge des Meßweges zwischen Sender und Empfänger auch bei einer Veränderung von Umgebungsbedingungen annähernd konstant ist.

15. Meßvorrichtung (2) nach Anspruch 14, bei der die Abstandsmittel (32) temperatur- und dehnungsbeständig ausgeführt sind.

16. Meßvorrichtung (2) nach einem der Ansprüche 1 bis 15, bei der zumindest ein Befestigungsmittel (34) vorgesehen ist, mit dem zumindest der Sender und der Empfänger an der Komponente(1) befestigbar sind.

17. Meßvorrichtung (2) nach einem der Ansprüche 1 bis 16, bei der eine Auswertevorrichtung (40) vorgesehen ist, mit der zumindest der Empfänger (18) verbunden ist.

18. Meßvorrichtung (2) nach einem der Ansprüche 1 bis 17, bei der der Sender und der Empfänger zumindest annähernd einander gegenüberliegend an der Komponente (1) angebracht sind.

19. Meßvorrichtung (2) nach einem der Ansprüche 1 bis 17, bei der der Sender und der Empfänger derart an der Komponente (1) angeordnet sind, daß das vom Empfänger empfangene Meßsignal im wesentlichen ein reflektiertes Meßsignal ist.

## Claims

1. Measuring device (2) for determining the boron concentration in a coolant (38) of a cooling circuit of a nuclear power station, a mobile emitter and a mobile receiver being respectively provided, with the interposition of at least one coolable edge region, for arrangement on a coolant-carrying component (1) of the cooling circuit.

2. Measuring device (2) according to Claim 1, in which the edge region has at least one cooling duct (20) through which a coolant (22) flows.

3. Measuring device (2) according to Claim 2, wherein air is used as the coolant (22).

4. Measuring device (2) according to one of Claims 2 or 3, in which the temperature of the coolant (22) can be defined in advance.

5. Measuring device (2) according to one of Claims 1 to 4, in which the edge region comprises an additional insulation layer (28).

6. Measuring device (2) according to one of Claims 1 to 5, in which the emitter and the receiver are respectively arranged in an associated chamber (14, 17).

7. Measuring device (2) according to one of Claims 1 to 6, in which a neutron source (16) is used as the emitter.

8. Measuring device (2) according to one of Claims 1 to 7, in which at least one counter tube (18) is used as the receiver.

9. Measuring device (2) according to one of Claims 1 to 8, in which the emitter and the receiver are respectively enclosed by a screen (31).

10. Measuring device (2) according to Claim 9, in which the screen (31) comprises a first layer of an absorbing moderator (30).

11. Measuring device (2) according to one of Claims 9 or 10, in which the screen (31) comprises a second layer of neutron-absorbing material (12).

12. Measuring device (2) according to one of Claims 9 to 11, in which the screen (31) comprises a third layer of austenitic material (10).

13. Measuring device (2) according to one of Claims 1 to 12, in which the emitter and the receiver are arranged in a casing (4, 6) made of one or more parts, in particular two parts.

14. Measuring device (2) according to one of Claims 1 to 13, in which spacers (32) are provided such that the length of the measurement path between the emitter and the receiver is approximately constant even in the event of a change in the ambient conditions.

15. Measuring device (2) according to Claim 14, in which the spacers (32) are designed so as to be resistant to temperature and expansion.

16. Measuring device (2) according to one of Claims 1 to 15, in which at least one fastening means (34) is provided, with which at least the emitter and the receiver can be fastened to the component (1).

17. Measuring device (2) according to one of Claims 1 to 16, in which an evaluation device (40) is provided, to which at least the receiver (18) is connected.

18. Measuring device (2) according to one of Claims 1 to 17, in which the emitter and the receiver are fitted at least approximately opposite one another on the component (1).

19. Measuring device (2) according to one of Claims 1 to 17, in which the emitter and the receiver are arranged on the component (1) in such a way that the measurement signal received by the receiver is essentially a reflected measurement signal.

## Revendications

1. Dispositif (2) de mesure pour déterminer une concentration en bore dans un fluide (38) de refroidissement d'un circuit de fluide de refroidissement d'une installation nucléaire, un émetteur mobile et un récepteur mobile étant prévus respectivement avec interposition d'au moins une zone d'espace pouvant être refroidie, pour le montage sur un composant (1) du circuit de fluide de refroidissement dans lequel passe du fluide de refroidissement.

2. Dispositif (2) de mesure suivant la revendication 1, dans lequel la zone d'espace comporte une canalisation (20) de refroidissement dans laquelle passe un fluide (22) de refroidissement.

3. Dispositif (2) de mesure suivant la revendication 2, dans lequel on utilise de l'air comme fluide (22) de refroidissement.

4. Dispositif (2) de mesure suivant l'une des revendications 2 ou 3, dans lequel la température du fluide (22) de refroidissement peut être prescrite.

5. Dispositif (2) de mesure suivant l'une des revendications 1 à 4, dans lequel la zone d'espace comprend une couche (28) d'isolation supplémentaire.

6. Dispositif (2) de mesure suivant l'une des revendications 1 à 5, dans lequel l'émetteur et le récepteur sont montés chacun dans une chambre (14, 17) associée.

7. Dispositif (2) de mesure suivant l'une des revendications 1 à 6, dans lequel on utilise une source (16) de neutrons comme émetteur.

8. Dispositif (2) de mesure suivant l'une des revendications 1 à 7, dans lequel on utilise comme récepteur au moins un tube (18) compteur.

9. Dispositif (2) de mesure suivant l'une des revendications 1 à 8, dans lequel l'émetteur et le récepteur sont entourés chacun d'un blindage (31).

10. Dispositif (2) de mesure suivant la revendication 9, dans lequel le blindage (31) comporte une première couche en un modérateur (30) absorbant.

11. Dispositif (2) de mesure suivant l'une des revendications 9 ou 10, dans lequel le blindage (31) comporte une deuxième couche en matériau (12) absorbant les neutrons.

12. Dispositif (2) de mesure suivant l'une des revendications 9 à 11, dans lequel le blindage (31) comporte une troisième couche en un matériau (10) austénitique.

13. Dispositif (2) de mesure suivant l'une des revendications 1 à 12, dans lequel l'émetteur et le récepteur sont montés dans un boîtier (4, 6) en une partie ou en plusieurs parties, notamment en deux parties.

14. Dispositif (2) de mesure suivant l'une des revendications 1 à 13, dans lequel il est prévu des moyens (32) de maintien à distance de telle manière que la longueur du trajet de mesure entre l'émetteur et le récepteur est à peu près constante même en cas de modification des conditions ambiantes.

15. Dispositif (2) de mesure suivant la revendication 14, dans lequel les moyens (32) de maintien à distance sont réalisés de manière à résister aux températures et à la dilatation.

16. Dispositif (2) de mesure suivant l'une des revendications 1 à 15, dans lequel il est prévu au moins un moyen (34) de fixation par lequel au moins l'émetteur et le récepteur peuvent être fixés au composant (1).

17. Dispositif (2) de mesure suivant l'une des revendications 1 à 16, dans lequel il est prévu un dispositif (40) d'exploitation auquel est relié au moins le récepteur (18).

18. Dispositif (2) de mesure suivant l'une des revendications 1 à 17, dans lequel l'émetteur et le récepteur sont montés au moins à peu près face à face sur le composant (1).

19. Dispositif (2) de mesure suivant l'une des revendications 1 à 17, dans lequel l'émetteur et le récepteur sont montés de telle manière sur le composant (1) que le signal de mesure reçu par le récepteur est essentiellement un signal de mesure réfléchi.
